# EUROPÄISCHE PATENTSCHRIFT

(11) **EP 0 471 979 B1**
(45) Veröffentlichungstag und Bekanntmachung des Hinweises auf die Patenterteilung: **05.06.1996**
(21) Anmeldenummer: 91111813.1
(22) Anmeldetag: 16.07.1991
(51) Int. Cl.: F16J 15/12

(54) **Weichstoffflachdichtung**
Soft material flat gasket
Joint plat en matière souple

(30) Priorität: 23.08.1990 DE 4026660; 03.07.1991 DE 4122007
(43) Veröffentlichungstag der Anmeldung: 26.02.1992
(73) Patentinhaber: GOETZE Payen GmbH, D-57562 Herdorf (DE)
(72) Erfinder: Kirschenmann, Michael, Dr., W-5000 Köln 91 (DE); Zerfass, Hans-Rainer, Dr., W-6204 Taunusstein-Neuhof (DE)

(56) Entgegenhaltungen:
- EP-A- 0 226 707
- DE-A- 3 541 727
- DE-A- 3 731 032

## Beschreibung

Die Erfindung betrifft eine Weichstoffflachdichtung, insbesondere Zylinderkopfdichtung, Auspuffflanschdichtung oder Nebendichtung für Verbrennungskraftmaschinen, bestehend aus einer porösen Weichstoffplatte mit gegebenenfalls einer zur Verstärkung eingelagerten Metallplatte sowie einer Imprägnation mit niedrig viskosen Polyorganosiloxanen, die in der einbaufertigen Dichtung vernetzt sind.

Weichstoffflachdichtungen für Verbrennungskraftmaschinen bestehen bevorzugt aus Faservliesplatten mit zur Verstärkung eingelagerten Metallblechen sowie einer Imprägnation mit einem flüssigen Kunstharz, das in der einbaufertigen Dichtung vernetzt ist. Die Fasern des Vlieses können aus asbestfreien Fasern bestehen, und entsprechend sind die Faservliese porös und dadurch imprägnierbar. Ebenso sind asbestfreie Flachdichtungen aus Graphitfolien oder Graphitplatten mit zur Verstärkung eingelagerten Metallblechen bekannt. Die Imprägnation dient vor allem der Verbesserung der Beständigkeit der Abdichtgüte und der Festigkeit der Flachdichtungen, und das Vernetzen des Imprägniermittels in der Dichtung erfolgt bevorzugt thermisch und gegebenenfalls durch Zugabe von Vernetzern oder Vernetzungshilfsmitteln.

Vor allem wegen der überragenden technologischen Eigenschaften werden vielfach flüssige Polyorganosiloxane zum Imprägnieren von Flachdichtungen verwendet. Verwendet werden dazu in erster Linie über Doppelbindungen vernetzende Polyorganosiloxane, wie Polyvinylsiloxane, oder über reaktive Wasserstoffatome vernetzende Polyorganosiloxane, wie Polymethylhydrogensiloxane oder Mischungen aus beiden. Zur Erzielung eines hohen Vernetzungsgrades beim anschließenden thermischen oder Strahlenvernetzen des Imprägniermittels in der Dichtung sind Vernetzungskatalysatoren aus organischen Schwermetallsalzen erforderlich.

Die Zugabe dieser Schwermetallsalze zu den Imprägniermittelbädern bewirken schon nach kurzer Zeit ein Vernetzen der Polyorganosiloxane, und das dadurch immer dickflüssiger werdende Imprägniermittel ist schon nach kurzer Topfzeit als Imprägniermittel nicht mehr zu gebrauchen.

Nach der DE-OS 36 43 743 hat man daher schon Weichstoffflachdichtungen zweistufig mit zunächst Suspensionen der Metallsalzkatalysatoren und dann mit den Polyorganosiloxanen imprägniert und so erreicht, daß das Imprägniermittel erst in der Dichtung zu vernetzen beginnt.

Nach der DE-PS 33 45 560 hat man den Imprägniermittelbädern außer Metallsalzkatalysatoren auch Chelatbildner zugegeben, die die Metallionen maskieren und die Wirksamkeit der Metallsalzkatalysatoren im Bereich der Raumtemperaturen blockieren. Dadurch wird ein frühzeitiges Vernetzen des Imprägniermittelbades verhindert.

AufZylinderkopfdichtungen für Verbrennungskraftmaschinen werden meistens nach dem Imprägnieren und Vernetzen des Imprägniermittels Schichten oder Auflagen aus RTV- oder LSR-Silikonkautschuken aufgetragen. Aber beim Vulkanisieren der Schichten oder Auflagen treten unter Umständen nachteilige Wechselwirkungen zwischen Vernetzungskatalysator des Imprägniermittles und Vernetzungskatalysator des aufgetragenen Silikonkautschuks ein, so daß der Silikonkautschuk überhaupt nicht mehr ausvulkanisiert und die Schichten oder Auflagen überhaupt nicht mehr funktionsfähig werden. Insbesondere Flachdichtungen mit durch Vorimprägnation eingetragenen hochaktiven Metallsalzkatalysatoren vor allem aus organischen Zinn- und Bleisalzen beeinträchtigen die Vulkanisation der Silikonelastomere sehr stark, während weniger aktive Metallsalzkataysatoren, wie organische Zinksalze, die Vulkanisation des Silikonelastomers zwar nicht behindern, aber dafür das Imprägniermittel nicht ausreichend mit nur einem niedrigen Vernetzungsgrad vernetzen.

Andererseits ist es auch bekannt, Polymere, wie zum Beispiel auch hoch viskose Silikonkautschuke, unter Verwendung organischer Peroxidverbindungen zu vernetzen. Man hat daher auch versucht, Imprägniermittel aus niedrig viskosen Polyorganosiloxanen in der Dichtung mit Peroxiden zu vernetzen, allerdings war der Vernetzungsgrad des Imprägniermittels sehr gering, und die Dichtungen waren als Zylinderkopfdichtung überhaupt nicht zu verwenden.

Aus der DE-A-35 41 727 ist ein Imprägniermittel für Weichstofflachdichtungen bekannt, wonach Silikonharze unter Radikalbildnerzusatz aus Peroxid auch bei Abwesenheit von Platinkatalysatoren sich vernetzen lassen. Derartig imprägnierte Dichtungen sind aber nach dem Vernetzen klebrig im Oberflächenbereich. Bei dem Imprägniermittel handelt es sich um eine Imprägnieremulsion.

Der vorliegenden Erfindung liegt daher die Aufgabe zugrunde, eine Flachdichtung gemäß Oberbegriff des Hauptpatentanspruches zu schaffen, deren Imprägniermittel auf der Basis niedrig viskoser Polyorganosiloxane in der Dichtung funktionsmäßig optimal gegebenenfalls auch ohne den beschriebenen nachteiligen Einfluß auf die Vulkanisation der anschließend auf die Dichtung aufgetragenen Silikonkautschuke vernetzt und aufgrund der praktisch unbegrenzten Topfzeit lange verarbeitbar ist.

Erfindungsgemäß wird diese Aufgabe durch die kennzeichnenden Merkmale des Anspruchs 1 gelöst. Vorteilhafte Ausgestaltungen der Erfindung sind in den Unteransprüchen dokumentiert.

Mit den erfindungsgemäß mit organischem Peroxid versehenen flüssigen Polyorganosiloxangemischen wurden Zylinderkopfdichtungen imprägniert, und das Imprägniermittel wurde anschließend bei etwa 230°C im Heißluftofen während etwa 2 1/2 Minuten vernetzt.

Obwohl bei Verwendung von Imprägniermitteln aus einem Polysiloxantyp alleine die peroxidische Vernetzung unbefriedigend ist und das vernetzte Imprägniermittel einen in organischen Lösungsmitteln extrahierbaren und damit unvernetzten beziehungsweise schwach vernetzten Anteil von bis zu 80 Gewichtsprozent besitzt, ist überraschenderweise die Vernetzung des Imprägniermittels aus den oben beschriebenen Polysiloxangemischen mit Peroxid sehr gut und funktionsmäßig befriedigend. Der Anteil an unvernetztem beziehungsweise extrahierbaren Imprägniermittel nach dem Vernetzen lag bei nur noch 15 bis 20 Gewichtsprozent und war erstaunlich niedrig. Auf die Flachdichtungen konnten Auflagen oder Beschichtungen aus Silikonkautschukmassen aufgetragen und problemlos mit guter Haftung in gewünschter Weise vulkanisiert werden.

Als organischer Peroxidvernetzer wird bevorzugt organisches Dialkylperoxid oder Dicumylperoxid verwendet. Gefunden wurde dabei, daß unter Zugabe organischer Metallsalze, wie bevorzugt Zinkstearate, Zinkoctoate und/oder Zinkmaleinate, zusammen mit dem Peroxidvernetzer noch bessere Vernetzungsgrade des Imprägniermittels erzielt werden können. Wenn die organischen Metallsalze als Vernetzungskatalysatoren den Imprägniermittelbädern zugegeben werden, können sie zur Blockierung ihrer Wirksamkeit bei Raumtemperatur, wie an und für sich bekannt, mit Chelatbildnern maskiert werden oder die organischen Metallsalze können durch Vorimprägnation in den Dichtungs-Weichstoff eingebracht sein.

Durch die Erfindung ist somit eine Flachdichtung geschaffen, die mit flüssigen Polyorgansiloxanen imprägniert und in der das Imprägniermittel mit guten Vernetzungsgrad vernetzt ist. Die Dichtung ist funktionsfähig und einsetzbar auch bei hoher Temperaturbelastung mit guter Abdichtwirkung, Festigkeit und Beständigkeit. Die Dichtung kann mit Silikonkautschuken beschichtet und/oder mit Auflagen versehen sein, und die Beschichtungen oder Auflagen sind problemlos in gewünschter Weise vulkanisierbar.

Im folgenden sind typische Rezepturen für Imprägniermittelzusammensetzungen angegeben:
- 1.: 70 Gewichtsteile Poly(methylhydrogensiloxan)
30 Gewichtsteile vinylgruppenhaltiges Polydimethylsiloxan
3 Gewichtsteile organisches Dialkylperoxid
- 2.: 75 Gewichtsteile Poly(methylhydrogensiloxan)
25 Gewichtsteile vinylgruppenhaltiges Polydimethylsiloxan
3 Gewichtsteile organisches Dialkylperoxid
- 3.: 80 Gewichtsteile Poly(methylhydrogensiloxan)
20 Gewichtsteile vinylgruppenhaltiges Polydimethylsiloxan
3 Gewichtsteile organisches Dialkylperoxid

Die Vernetzung des Imprägniermittels in der Dichtung erfolgt im Heißluftofen während 2 1/2 Minuten bei 230°C.

## Patentansprüche

1. Weichstoffflachdichtung, insbesondere Zylinderkopfdichtung, Auspuffflanschdichtung oder Nebendichtung für Verbrennungskraftmaschinen, bestehend aus einer porösen Weichstoffplatte mit gegebenenfalls einer zur Verstärkung eingelagerten Metallplatte sowie einer Imprägnation mit niedrig viskosen Polyorganosiloxanen, die in der einbaufertigen Dichtung vernetzt sind, dadurch gekennzeichnet, daß die Imprägnation aus den niedrig viskosen Polyorganosiloxanen, organischen Peroxiden, sowie gegebenenfalls organischen Metallsalzen besteht und daß die Polysiloxane aus einem Gemisch mit einer zur Imprägnierung geeigneten Viskosität Doppelbindungen enthaltender Polyorganosiloxane und Polyhydrogensiloxane im Verhältnis von 20 bis 30 Gewichtsteilen Polyorganosiloxane und 70 bis 80 Gewichtsteile Polyhydrogensiloxane bestehen, und daß die Polysiloxane unter Verwendung von 1 bis 6 Gewichtsteilen auf 100 Gewichtsteile Polysiloxangemisch organischer Peroxide als Vernetzer vernetzt sind.

2. Weichstoffflachdichtung nach Anspruch 1, dadurch gekennzeichnet, daß die Doppelbindungen enthaltenden Polysiloxane aus Methylvinylpolysiloxanen und/oder Allylpolysiloxan und daß die Polyorganhydrogensiloxane aus Polymethylhydrogensiloxan bestehen.

3. Weichstoffflachdichtung nach den Ansprüchen 1 und 2, dadurch gekennzeichnet, daß auf die fertiggestellte Flachdichtung Auflagen und/oder Beschichtungen aus Silikonkautschuk aufgetragen und dort ausvulkanisiert sind.

## Claims

1. Soft material flat gasket, in particular cylinder head gasket, exhaust flange gasket or auxiliary gasket for internal combustion engines, comprising a porous soft material panel optionally having a metal plate incorporated for reinforcement and being impregnated with low-viscosity polyorganosiloxanes which are crosslinked in the gasket which is ready for installation, characterised in that the impregnation consists of the low-viscosity polyorganosiloxanes, organic peroxides, and optionally organic metal salts, and in that the polysiloxanes consist of a mixture, having a viscosity suitable for impregnation, of polyorganosiloxanes containing double bonds and polyhydrogensiloxanes in the ratio of 20 to 30 parts by weight of polyorganosiloxanes and 70 to 80 parts by weight of polyhydrogensiloxanes, and in that the polysiloxanes are crosslinked using 1 to 6 parts by weight of organic peroxides as crosslinkers for 100 parts by weight of polysiloxane mixture.

2. Soft material flat gasket according to claim 1, characterised in that the polysiloxanes containing double bonds consist of methylvinylpolysiloxanes and/or alkylpolysiloxane, and in that the polyorganohydrogensiloxanes consist of polymethylhydrogensiloxane.

3. Soft material flat gasket according to claims 1 and 2, characterised in that coverings and/or coatings of silicone rubber are applied to the finished flat gasket and vulcanised to completion there.

## Revendications

1. Joint plat en matière souple en particulier un joint de tête de cylindre, un joint de bride d'échappement ou un joint secondaire pour des moteurs à combustion interne, constitué à partir d'une plaque poreuse en matière souple comportant éventuellement une plaque métallique insérée pour son renforcement ainsi qu'une imprégnation avec des polyorganosiloxanes faiblement visqueux, qui sont réticulés dans le joint à l'état fini, caractérisé en ce que l'imprégnation est constituée des polyorganosiloxanes faiblement visqueux, de peroxides organiques, ainsi qu'éventuellement de sels de métal organiques et en ce que les polysiloxanes sont constitués à partir d'un mélange ayant une viscosité adaptée à l'imprégnation, de polyhydrosiloxanes et de polyorganosiloxanes contenant des liaisons doubles avec un rapport de 20 à 30 parties en poids de polyorganosiloxanes et de 70 à 80 parties en poids de polyhydrosiloxanes, et en ce que les polysiloxanes sont réticulés en utilisant de 1 à 6 parties en poids de peroxides organiques en tant qu'agent de réticulation pour 100 parties en poids de mélange de polysiloxanes.

2. Joint plat en matière souple selon la revendication 1, caractérisé en ce que les polysiloxanes contenant les liaisons doubles sont constituées de méthylvinylpolysiloxanes et/ou d'alylpolysiloxane et en ce que les polyorganohydrosiloxanes sont constitués de polyméthylhydrosiloxanes.

3. Joint plat en matière souple selon la revendication 1 et la revendication 2, caractérisé en ce que sur le joint plat fini, des couches et/ou des revêtements en caoutchouc au silicone sont appliqués et vulcanisés en place.
